# EUROPEAN PATENT SPECIFICATION

(11) **EP 0 718 607 B1**
(45) Date of publication and mention of the grant of the patent: **19.09.2001**
(21) Application number: 95830541.9
(22) Date of filing: 22.12.1995
(51) Int. Cl.: G01F 23/00, G01F 23/38

(54) **An automatic system for the detection and remote transmission of data in particular of typical data relative to tanks for liquid fuels**
Automatisches Erfassungs- und Fernübertragungssystem für Daten insbesondere für Daten im Zusammenhang mit Tanks für Flüssigbrennstoffe
Système automatique de détection et de transmission à distance de données en particulier de données relatives à des réservoirs de combustible liquide

(30) Priority: 23.12.1994 IT AN940036
(43) Date of publication of application: 26.06.1996
(73) Proprietor: Lorenzetti, Nerina, 60035 Jesi (Ancona) (IT)
(72) Inventor: Lorenzetti, Nerina, 60035 Jesi (Ancona) (IT)
(74) Representative: Coppi, Cecilia

(56) References cited:
- GB-A- 2 271 691
- US-A- 4 573 115
- US-A- 5 261 276
- US-A- 5 282 386
- IEEE TRANSACTIONS ON NUCLEAR SCIENCE, vol. 29, no. 1, February 1982, NEW YORK,US, pages 974-978, XP002028459 J.C. MATOR,E.A.: "A MICROPROCESSOR BASED REACTOR VESSEL CONTAINMENT MONITOR"
- AUTOMATISIERUNGSTECHNISCHE PRAXIS - ATP, vol. 35, no. 2, 1 February 1993, pages 71-76, 77 - 83, XP000344898 SCHNEIDER H -J: "INTERKAMA 92: SENSORSYSTEME UND DIE KOMMUNIATION IM FELD INTERKAMA 92: SENSOR SYSTEMS AND FIELD COMMUNICATION"

## Description

The subject of the invention is an automatic system for the detection and transmission of data, in particular of typical data relative to tanks for liquid fuels, such as for example the indication of the transit of the quantity of liquid fuel contained in tanks, through predetermined points, the pressure or depression of the air contained in a cavity, the efficiency check of a cathodic protection, or the like, including means connected to the tank, to detect the typical data and transform them into electrical type signals, transmission means of the said signals to a collection and/or processing station, timers which enable the detection and transmission means for a predetermined period of time.

It is a known fact that the remote transmission of data relative to, for example, the content of tanks is a problem that has been tackled by others who have developed dedicated electronic systems.

The known systems used data detection means, a local transmitter connected to timers which enable it in cycles and computer communication means with a traditional modem structure and using standard protocols that present limitations, i.e.:
- A complex and outdated structure in relation to the essential aim to be achieved, i.e. the indication of only certain data, such as, for example, the tank levels when refilling is considered necessary;
- a notable consumption of energy of the transmitter batteries, since at least part of the means connected to the transmitter are always enabled and the data transmission is systematically carried out at set intervals of time;
- the non-detection and transmission of the charge status of the' transmitter batteries.

The aim of this invention, therefore, is the creation of a system of the above-mentioned type with a simple construction and in such a way as to have a very low level of absorption in the stand-by phases of the encoded transmitter, in order to extend the autonomy of its power-supply batteries as far as possible. A further objective, limited to the case in which the data are transferred by telephone lines from several tanks to a processing centre, for example a remote PC, is the development of a hardware-software structure that is as safe and economical as possible.

The invention achieves the above aims with a system such as the one described at the beginning, in which the detector-transmitter includes a control and static interface circuit, i.e. with no active basic pulse clock, and consists of a monostable circuit constructed in such a way that, during the stand-by phase, the detector-transmitter remains locked with a very high degree of isolation.

This contrivance makes it possible to maintain the individual devices of the detector-transmitter in a locked condition with a very high degree of isolation and thus with a negligible absorption of energy in the stand-by phase of the system.

Initialization of the transmission process is favourably entrusted to a reed.

The reed also acts as a sensor for one of the typical data.

The control circuit consists of a monostable multivibrator (timer) with a single non-presettable trigger input and which is controlled by' the reed of the collector and can be triggered on both positive and negative fronts.

The monostable control circuit is achieved by means of static C-MOS circuits without an active basic pulse clock.

The combination of the aforesaid characteristics presents the advantage that due to the magnetic hysteresis of the reed, its open and closed switchings correspond to two levels of the typical data to be detected, for example the level of a liquid. It is therefore possible with a single reed bulb and a single monostable multivibrator to detect and transmit two different thresholds.

Moreover, since the reed is both the member for controlling the enabling of the transmitter and the sensor which detects the typical data, the transmission events are notably limited in terms of their numbers, with a consequent lowering in energy absorption compared with existing models which function with transmission enabling at constant time intervals and thus regardless of the variations of the data to be detected.

According to a further characteristic of the invention, including at least one intermediate data collection station, by means of radio transmission, this collection station retransmits the data to a central computer, for example a so-called Host computer by means of a switched telephone line and using DTMF type telesignalling tones.

One advantage is that the intermediate receiving collection station can be programmed relative to the transmission and receiving functions.

The transmission protocol includes a retransmission phase of the data packet, i.e. of the string of data transmitted by the receiving station to the transmitting station, a phase for comparing the data packet received back with the original one sent and a phase for authorization of acquisition of the data transmitted, by sending an authorization command string.

The transmission and receiving protocol with DTMF tones includes in particular terminal recognition commands, data string start and end commands, data string acceptance confirm commands, disconnection commands and request commands for remote programming from the central computer (host) of the client terminal, in this case the intermediate station, and characters for the definition of the data.

As an additional feature, it is possible to foresee passwords for programming enabling, a memory for the telephone numbers of the Host computer or computers to which the intermediate station must send the data, a data transmission programme which repeats the telephone call several times, waiting for the line to be free if it is busy and an automatic procedure which can be enabled and disabled for the transmission of alarms or other indications.

The aforesaid characteristics permit correct and simple transmission of the typical data to the remote stations and in addition to the advantages inherent in the protocol itself and in the automatic functions also make it possible to reprogram the intermediate stations as needed without having to replace hardware and without the need ' for local intervention at the intermediate stations. Furthermore, the structure of the communication network and the communication protocol permit collection of remote data from more than one intermediate station and from more than one local object, for example a tank, which is under observation.

The invention foresees a system of the aforesaid type in combination with the collection of typical data from a tank for liquid fuels. In this case, it is possible to foresee a local transmitter connected to a tank and to which it is possible to connect at least one liquid detector situated in the head of the tank float and/or at least one efficiency detector of a cathodic protection in the event of a double protective case and/or at least one detector of the pressure or vacuum existing inside an air-filled cavity.

In an improved version, in combination with one or more of the aforesaid detectors, the invention foresees at least one detector of the charge status of the power-supply batteries of the transmitter connected to the tank.

The level detector includes electromagnetic means, consisting of at least one mobile permanent magnet on a predetermined path based on the level of liquid fuel and at least one detector consisting of a stationary reed which works together with the permanent magnet.

To ensure unambiguous system reading, when in particular the permanent magnet or magnets move along a circular path, the reed sensor is connected to at least one additional sensor consisting of a Hall probe which is in a different position to the reed sensor.

The construction of the level detector is such that it can be calibrated to enable the transmitter only when the liquid passes through a limited number of predetermined levels and which are considered significant for correct refilling management.

The level detector advantageously consists of at least one permanent magnet which turns on a circular path and which takes up different angular positions according to the level of liquid in the tank and at least one stationary reed sensor, the status of which is controlled by the permanent magnet and which is positioned along the circular path of the permanent magnet so as to magnetically interfere with the same. The indication that a predetermined level has been reached is therefore also the transmission enabling signal of the transmitter.

The detector for the charge status of the transmitter power-supply battery consists of a voltage indicator.

In the case of double-walled tanks with an intermediate cavity, the latter contains pressure sensors which emit electrical signals correlated to the pressure and vacuum value and which are connected with their output to the transmitter.

When the tank does not have a double case and is made of metal, it is possible to fit a cathodic protection consisting of a sacrificial anode made from more electronegative metal than the metal from which the tank is made and an unpolarizable reference anode, since the voltage difference between the reference anode and the sacrificial anode is detected and signalled to the transmitter when the said difference in potential falls below a predetermined threshold of immunity.

The invention presents further characteristics which are the subject of the claims indicated below.

The characteristics of the invention and the advantages deriving from these will be better explained by the following description of some non-limiting working examples, illustrated in the figures, in which:

Figs 1 and 2 diagrammatically illustrate the system for the remote transmission of typical data of a tank for liquid fuels, respectively underground and above-ground to a collection station by means of radio transmission.

Fig. 3 diagrammatically illustrates the system according to the invention for the transmission of typical data of a tank for liquid fuels to a computerised collection and processing station by means of an intermediate receiving station which communicates with the central computer by means of telephone lines.

Figs. 4 to 5 diagrammatically illustrate three different construction forms of a sensor as per the invention for detection of the level of liquid fuel in the tanks as per the previous figures.

Fig. 6 illustrates the wiring diagram of a working example of the transmitter as per the invention.

Fig. 7 illustrates the wiring diagram of a receiver as per the invention.

Fig. 8 diagrammatically illustrates a double-wall tank for liquid fuels with cavity and sensors for detecting the pressure or vacuum within the cavity.

Fig. 9 diagrammatically illustrates a single-wall tank for liquid fuels equipped with control sensors for the condition of the tank, consisting of a cathodic protection, with a sacrificial anode and a reference anode.

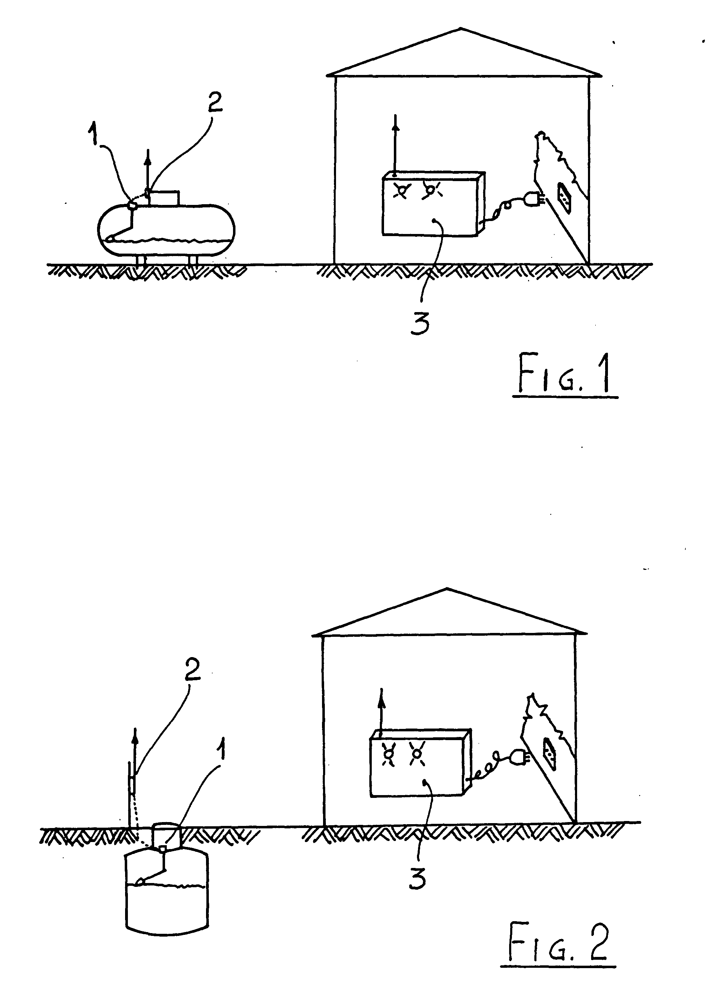

With reference to figs. 1, 2, 8 and 9, a system as per the invention for the collection and transmission of typical data relative to a tank for liquid fuels consists of a level detector 1 of the liquid fuel and a transmitter 2 which are connected to the tank.

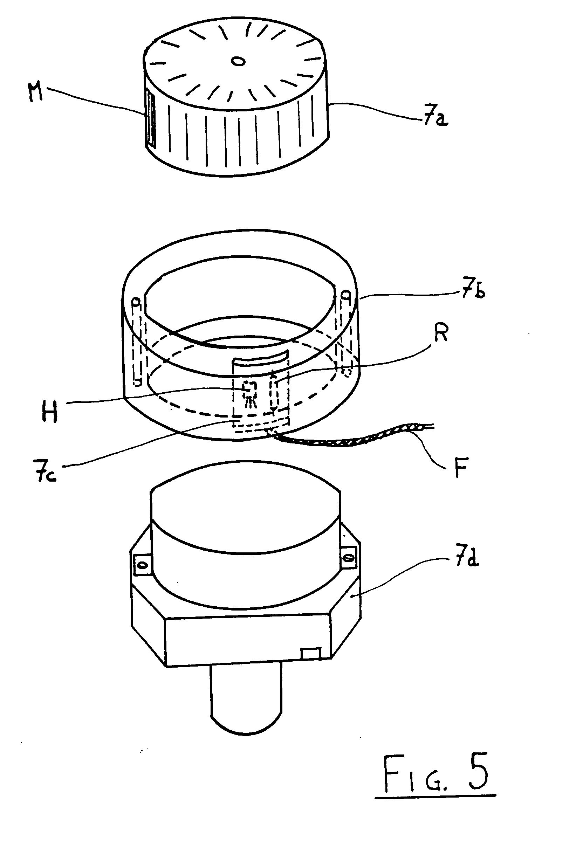

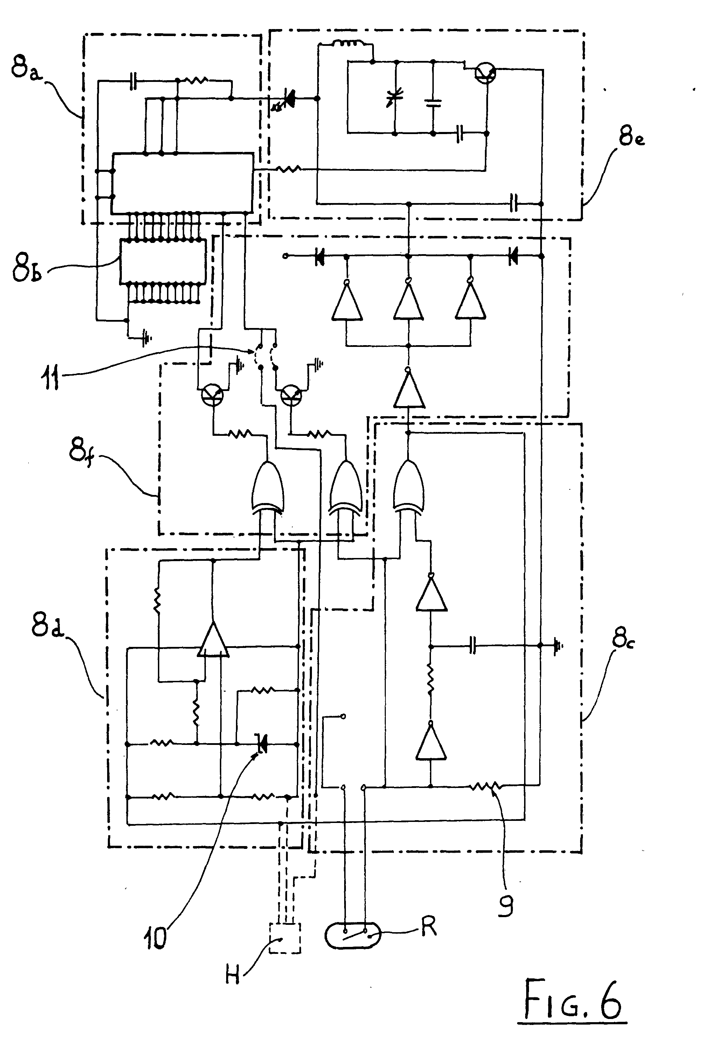

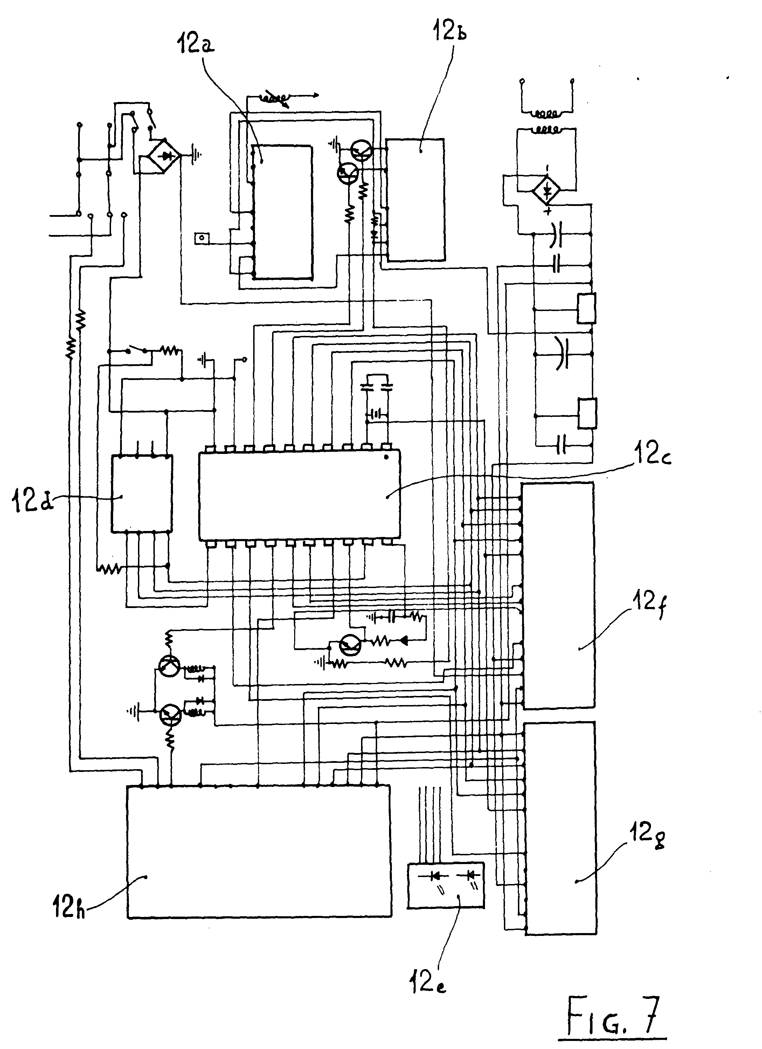

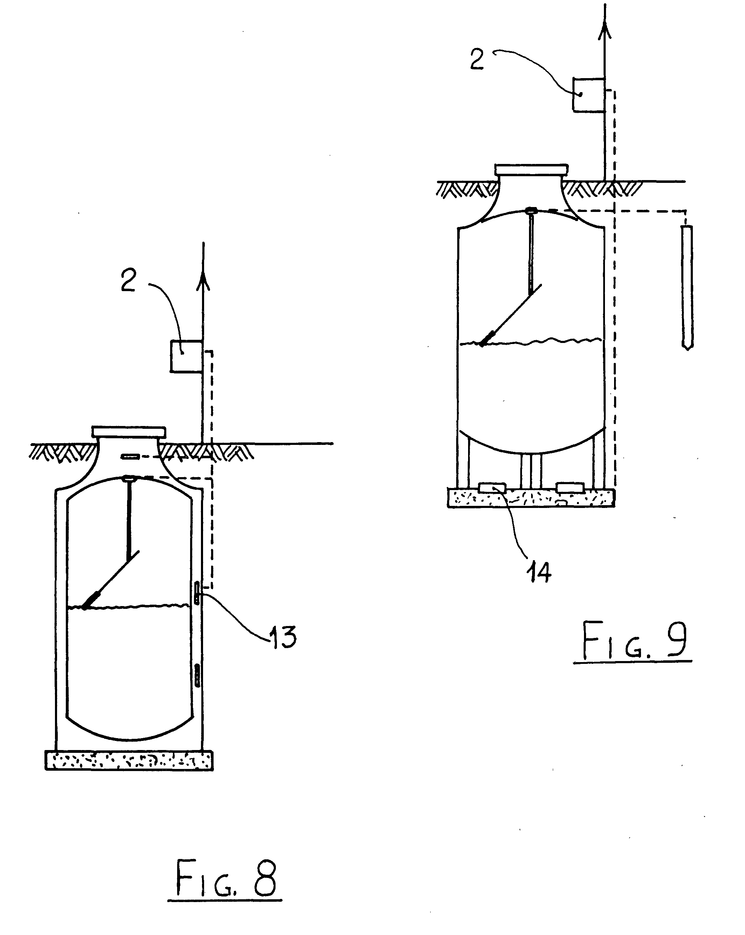

Moreover, as shown in figs. 9 and 10, in combination with or separately from the level detector 1, the system connected to the tank may consist of one or more pressure or vacuum detectors 13 in a cavity of a double-wall tank, or a cathodic protection consisting of a sacrificial anode 14 and a reference anode 15 and to which means are connected to detect the difference in voltage between the sacrificial anode 14 and the reference anode 15 with respect to the tank wall.

In combination with the aforesaid detectors, the system may foresee means connected to the transmitter to detect the charge status of the transmitter power-supply batteries.

The detectors 1, 13 and 14 are connected to a transmitter 2 which communicates via radio with a receiving station of a remote control terminal 3 to which the detected data are sent via radio for display, memorizing, processing, etc. and which is positioned nearby, for example in offices, houses, etc.

According to a first working form as per figs. 1 and 2, the data collected locally are transmitted to the control terminal which is equipped with indicator LEDs controlled by appropriate electronics for the display of the collected data.

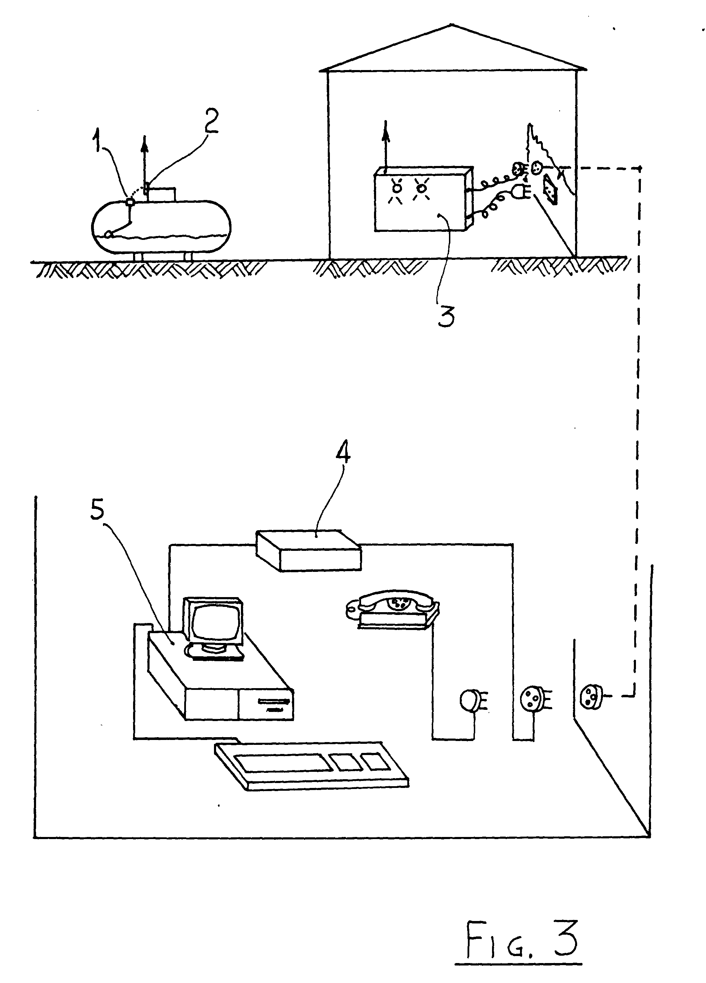

In the working variation in fig. 3, on the other hand, the receiving station acts as an intermediate collector of the data supplied by the local transmitter or transmitters 2 and as a transmitter of the said data via a switched telephone line to a central processing station which consists of a remote so-called host computer 5 connected to the switched telephone line by means of a modem 4 and of appropriate interfaces. The control terminal receives the data via radio and transmits them automatically via telephone line to the host computer 5 of the processing station.

The host computer 5 thus receives the data collected by the devices 1, 13, 14, 15 and by the means for detecting the charge status of the batteries of the transmitter 2 and memorizes them. This option makes it possible to collect data from a large number of intermediate stations situated in different locations and from a similar number of tanks connected to the stations and placed under control.

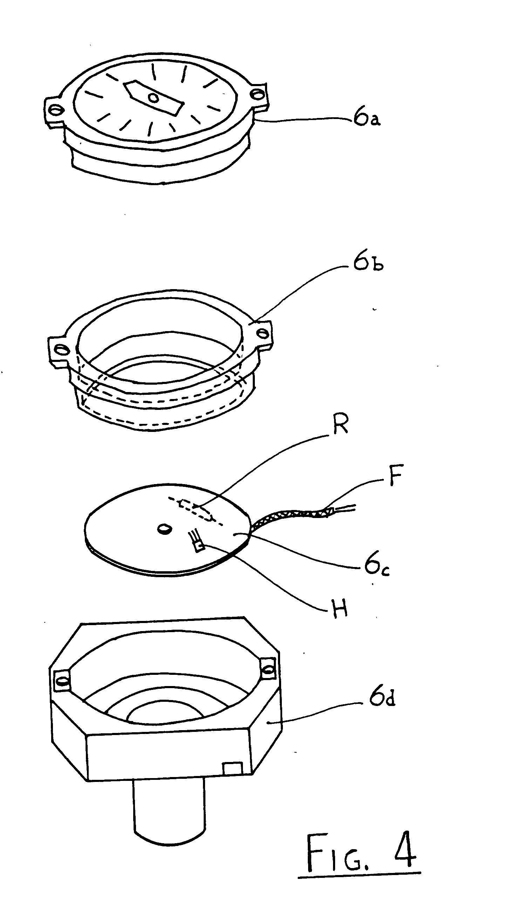

Figs. 4 to 5 illustrate various working forms of the level detectors of the liquid fuel in the tanks.

The level detectors are normally positioned at the upper end of the float, in correspondence with the head of the float, and are connected by means of cables to the inputs of the transmitter 2.

The tanks may have various types of float head, and figures 4 to 6 therefore illustrate three constructionally different types of detector' which function according to the same principle.

With reference to fig. 4, the float head comprises a mechanical level indicator 6a which is controlled by permanent rotating magnets which are housed in the head 6d of the float itself and which cause the indicator 16 to move. Below the indicator 16, on a printed circuit resembling a circular plate 6c, at least one and preferably several magnetic sensors are fixed , consisting of at least one reed bulb R and/or at least one Hall sensor H. The magnetic sensors R and H are placed at predetermined angles to each other and are stationary. The printed circuit 6c may be mounted in an intermediate casing 6b, or directly in the body 6d of the float head. Connecting cables F of the sensors R and H lead from the printed circuit 6c to the transmitter 2.

The contact of the reed bulb R opens or closes and the Hall sensor H, if fitted, switches subsequent to the magnetic field supplied by the rotating magnets located inside the tank float. The position of the rotating magnets and thus the condition of conduction or locking of the reed R and/or of the hall sensor H depend on the level of liquid inside the tank. The angular position of the printed circuit which holds the magnetic sensors R and/or H can be varied during assembly and the response of the magnetic sensor or sensors R and H can thus be easily varied during manufacture, or before final fixing of the printed circuit. This makes it possible to adjust or vary the intervention thresholds of the magnetic sensors to certain predetermined levels of liquid, simply by turning the printed circuit around its own axis.

In the float as per fig. 5, here too the detector consists of magnetic sensors comprising at least one reed bulb R and/or at least one and preferably more Hall sensors H positioned on a printed circuit which can be mounted in the float head or in an intermediate support casing 7b. This casing 7b is, however, cylindrical or annular in shape and is fitted on the outer circumference of the float head 7d. In the absence of a casing 7b, the printed circuit 7c, with the magnetic sensor or sensors R and H, may also be fixed directly on the outer circumference of the float head 7d.

The mechanical level indicator, on the other hand, consists of a mobile cylindrical part 7a which is turned by the magnetic field of the rotating magnets supported in the float head 7d. The angular position of the cylinder 7a also depends on the level of liquid in the tank. A permanent magnet M is mounted on the peripheral side of the cylinder 7a and whose magnetic field controls the conduction and locking status variations of the magnetic sensors R and H, the cylinder being mounted with its peripheral surface which holds the magnet M facing towards the sensors R and H. By passing in front of the said sensors R and H, the magnet M will determine their status switching depending on its position.

The functioning principle is basically the same as described in the previous example, only in this case the indicator which is turned by the rotating magnets in the float head in turn holds at least one permanent magnet M which acts on the magnetic sensors R and H.

Similar to what was described for the previous example, also in this second example it is possible to calibrate or vary the switching thresholds of the sensors, i.e. to vary the levels of liquid which when reached cause the magnet M on the indicator 7a to act on the sensors R and H. The variation or adjustment takes place similarly to what was described in the previous example, by rotating the support 7b of the printed circuit 7c, which holds the sensors R and H, around its own axis.

In the magnetic detector, the reed bulb R must always be present, while the Hall sensors are auxiliary components which make it possible to work with intervention thresholds that cannot be reached with the reed R alone, or which make the reading of the collected data unambiguous with the correlated liquid levels.

In a further working example, the printed circuit 6c which holds the magnetic sensors R and H, and which consists of a plate, is positioned above the indicator 16 which holds the permanent magnets M. The magnetic field which acts on the sensors R and H is in this case the field of the magnets M on the indicator and not of the rotating magnets in the body 6d of the float head which turn the indicator 16. This design has the advantage of further simplifying the construction of the detector, making the magnetic sensors R and H easily accessible from outside the float head.

Fig. 6 shows a working example of the transmitter which comprises various operative blocks, consisting of an encoding circuit 8a, a microswitch unit 8b, a monostable multivibrator 8c, a voltage indicator 8d for reading the battery charge, a high frequency oscillator 8e and a circuit 8f which incorporates the interfacing logic.

The electromagnetic Hall sensor H is connected to the encoder 8a which generates a serial code which is then transmitted by the transmitter 2 and which comprises several bits that can be preset directly and manually thanks to the microswitches 8b, while the remaining bits are set automatically according to the switchings of the sensors R and H and of the voltage indicator 8d which detects the charge status of the batteries of the transmitter 2.

The monostable multivibrator 8c consists of static C-MOS circuits and has no active basic pulse clock. The monostable multivibrator 8c has only one trigger input, which cannot be preset and is controlled by the reed R of the detector, having the particular feature of being triggered on both positive and negative fronts, i.e. regardless of whether the contact of the detector reed R is open or closed. The monostable multivibrator 8c commands the remaining blocks of the transmitter and during the rest phase these blocks are not energized.

The implementation of the aforesaid functions, i.e. monostable multivibrator with single non-presettable trigger input, triggerable on positive and negative fronts, with piloted output loads not energized during the rest phase and comprising static C-MOS circuits without an active basic pulse clock, can be obtained in any way and with various types of integrated circuits.

The combination reed R and monostable multivibrator 8c constitute the exclusive command block of the combination detector-transmitter, since during the active phase this is the only means of' energizing the remaining blocks of the detector-transmitter system.

During the rest phase, the blocks are isolated from the power supply with very high isolation values compared with the power supply thanks to the typical structure of the C-MOS components.

The only absorption during the rest phase (stand-by) consists of the resistance 9 connected to the reed R. The consumption is very low since the resistance 9 has very high values, and power is only consumed if the contact of the reed R is closed.

In stand-by conditions, therefore, the detector-transmitter assembly absorbs very little current and battery consumption is therefore notably reduced.

An additional and substantial advantage of this device consists of the fact that the transmitter, i.e. all the blocks necessary for transmission and detection, is enabled only when there is a significant variation in the level of liquid in the tank. Absorption of current becomes significant only when the reed R changes status, enabling the monostable multivibrator and causing all the blocks to be energized for a predetermined period of time which does not generally exceed one minute and during which transmission takes place.

The Hall sensor H is not strictly necessary and its presence or absence depends on the need to increase the discrimination level of the intensity of the rotating magnetic fields, when the predetermined intervention thresholds do not permit an unambiguous reading with the reed R only. The selection of which of the two signals will be applied to a pin of the serial encoder 8a is made by inserting a continuity jumper 11. In the event that at least one Hall sensor H is present, the reed sensor is used mainly to initialize the transmission process, i.e. to enable the transmitter by connecting blocks 8a to 8f to the power supply, while the setting of the transmitted level bit is carried out by the Hall sensor H thanks to the jumper 11.

The transmitted string comprises the logic status determined by the reed R and by the hall probe H if present, the logic status determined by the voltage indicator 8d, the output of which changes status according to whether the battery voltage is above or below a preset voltage reference threshold and which can be varied as required by replacing the component 10 in fig. 6.

The logic statuses including those relative to any pressure and vacuum sensors in the cavity or to the voltage indicator between the value detected at the sacrificial anode and that detected at the reference anode as per figs. 8 and 9, are sent to the inputs of the encoder 8a which encodes them. Any type of encoder may be used; the example shows a 12 pin encoder. The encoding pins that are not collected to the sensors are set manually by the user by means of the microswitches 8b.

At the end of the time period determined by the monostable multivibrator, the entire system is placed in the rest condition, and all the blocks are de-energized in order to save power.

Fig. 7 shows a receiver, i.e. the control terminal that comprises the following main blocks: a receiving-squaring circuit 12a, a decoder circuit 12b, a single chip microcomputer 12c, a non-volatile memory 12d, an LED display circuit 12e, a DTMF tone decoder 12f, a DTMF tone encoder 12g and an interface for telephone line connection 12h.

The receiving-squaring circuit 12a is always on and performs the task of receiving the radio transmission of the encoded transmitter and of amplifying and squaring the serial train of pulses to enable it to be decoded. This takes place in the decoder 12b which examines the serial code transmitted by the receiving-squaring circuit 12a and if this coincides with the code preset on the decoding pins sends a signal to the system indicating acceptance of the data. Similar to what was foreseen in the transmitter 2, a part of the bits is set manually and in the same way as the setting of the transmitter 2 by means of microswitches. The remaining bits connected to the data are set automatically by the appropriately programmed CPU 12c. This performs a rapid scan of all the possible bit values, simulating all the possible serial codes arriving from the tank and captures the valid ones. When this occurs, the output of the decoder 12b signals it to the CPU 12c which blocks the scanning and after a certain period of time in which this remains stable the data is accepted and transferred to a location of the non-volatile memory 12d.

For merely local display by the control terminal, the DTMF tone decoder and the encoder and the interface for telephone line connection with a host computer 5 are superfluous, while in addition to the blocks described above display means 12e are foreseen which may be of any type, optical and/or acoustic, and which may be' individual or in combination.

For a limited number of data, such as relative to the example of the tank, the data bits are four at most and it is therefore advantageous to foresee LED display means, for example with different colours for each data to be indicated.

The operations performed by the individual LEDs may be varied and for example to indicate the charge level of the batteries its is possible to foresee a LED, for example green, which remains lit when the charge is above the preset reference threshold and which flashes when the charge, i.e. the battery voltage, falls below the said reference voltage.

To indicate the level of liquid in the tank it is possible to use a LED with a different colour, for example red, which remains unlit when the level is greater than 40% and less than 10% and flashes when the level is between 10% and 40%.

The thresholds relative to battery charge, level, pressure or vacuum and potential difference between sacrificial anode and reference anode are subject to variations due to slight drifts and to the tolerances of the components. These drifts do not, however, compromise the functioning of the system.

In accordance with the refinement as per fig. 3, the control terminal may constitute an intermediate station for the collection of data which are then sent to a central processing station consisting of a host computer, by means of telephone lines.

Local display at the control terminal may obviously be excluded ' or foreseen in combination with transmission to the host computer.

In this case, the control terminal must be equipped with a DTMF tome encoder and decoder 12f and 12g and an interface for telephone line connection 12h.

The control terminal can be programmed for communication with the host computer. This can be done directly from the host computer 5. The programming data consists basically of a password for access to the remote programming, an identification code of the control terminal, the telephone number or numbers with which the control terminal must communicate and the selection means for tone or pulse transmission, and if foreseen a flag to enable transmission of the signal that the tank has been refilled.

All these data are set and memorized in the non-volatile memory 12d of the control terminal. Each subsequent reprogramming does not require replacement of the hardware or local intervention.

In this working example, the control terminal receives and memorizes the data transmitted by the transmitter 2. The control terminal is programmed in such a way that the telephone call to the host computer 5 is made automatically, using the corresponding telephone number present in its memory. The control terminal can also be programmed so that it automatically carries out an analysis of the line and if this is already busy with another call, the call to the host computer 5 will only begin at the end of the call in progress.

If for any reason whatsoever the communication is unsuccessful, the control terminal is also programmed to automatically repeat the call at preset time intervals and for a preset number of times.

The communication interface 12h and the DTMF tone decoder and encoder are not described in detail since they are well-known devices and widely used in communications via telephone line.

For transmissions between the control terminal and the host computer 5 a communication protocol has been developed, based on commands and packets of DTMF characters arranged in strings of varying length according to the data represented. The table of commands includes the DTMF decimal numerical characters 0-9 for the data to be communicated which are contained within the string and the other alphanumeric characters for the commands and the management of the strings.

A possible example in no way binding or limiting includes the #= for recognition of the terminals, A= to open the string, B= end of the string, C= to confirm string acceptance, D= disconnection, interruption of the communication, 0-9= communication data. The character "*" constitutes the prefix for the request for remote programming of the control terminal by the host computer 5.

The remote programming by the host computer 5 takes place by writing in the non-volatile memory 12d of the control terminal, thanks to the sending of data packets arranged in DTMF strings and of the relative commands. In this way all the typical identification data which programme the functioning are allocated in the control terminal memory, and in particular the password for access to the programming ' of the control terminal, the identification code of the control terminal, the telephone numbers to which the control terminal must send the communications and, if foreseen, enabling of alarm transmission.

The communication of the data to the host computer 5 takes place after the control terminal has automatically called the host computer 5. The control terminal then sends the host computer 5 the strings of commands and data packets arranged in DTMF strings relative to its identification code, to the data detected by the sensors R, H, 14 and 15 connected to the tank and to any alarms or indications, such as tank refilling, if the latter have been foreseen in the programming.

With a modification, the transmission of the data and the commands between the control terminal and the host computer 5 foresees a checking phase of the correctness of the transmitted data and commands which consists of the total return of the same to the transmitting device, i.e. to the control terminal or to the host computer. The transmitting terminal compares the returned data with the data in its possession and which were transmitted and if they are the same, authorization is given for acceptance of the data transmitted to the receiving terminal, i.e. to the control terminal or to the host computer 5.

This procedure makes it possible to identify any communication errors which may have led to a modification of the original data.

This technique can also be used in the communication between the transmitter 2 connected to the tank and the receiving control terminal, the transmitter 2 being connected to a receiving block and the control terminal being connected to a transmitting block.

In this case, the transitions of the reed contact R start a double sequential timer which is connected to the transmitter 2 of the tank. The timed cycle comprises two phases: a first timed phase during which the previously described encoded transmission is enabled. A second timed phase after the first one, in which an encoded receiver is enabled.

The codes transmitted by the transmitter 2 on the tank are received by the control terminal which sends them back again via radio to the said transmitter. Only if the codes sent back to the transmitter 2 of the tank are the same as the original ones will the transmitter block the repetition of the cycle. If on the other hand there is no correspondence between the original codes and those retransmitted, then the timer will automatically repeat the two transmission and reception cycles. Thanks to this modification, correct reception of the codes is absolutely certain, including the transmission via radio between the tank and the control terminal. At the end of the transmission and reception cycles necessary for correct code transmission, the transmitter returns to the rest position, de-energizing the individual blocks as described previously.

Figs. 8 and 9 show the means of control of the tank conditions, as described previously.

In a double wall tank with cavity, at least one pressure or vacuum sensor 13 is positioned in the cavity. The pressure inside the cavity may alternatively be equal to the atmospheric pressure or below it. The pressure sensors detect the increase in pressure with respect to the initial pressure or to a reference pressure, while the data relative to this increase are transmitted to the control terminal via radio and from here to a host computer 5 if foreseen, as previously described.

The example in fig. 9 is a further working form of the tank conditions, particularly suited to single wall tanks. The structure to be protected is the underground tank without the second external wall. At the bottom of the tank is a sacrificial anode 14 which is made from more electronegative metal, for example magnesium, than the tank metal. An additional unpolarizable anode 15, the so-called reference anode, (which may be made from Cu/CuSO₂) is also foreseen. An electronic circuit detects the fulfilment of the condition in which the difference in voltage between the reference structure and the sacrificial anode 14 falls below the established threshold (immunity threshold < 1 for an iron structure and a magnesium sacrificial anode, measurement made with respect to the reference anode 15), and sends a status signal to the transmitter which in turn sends it via radio to the control terminal.

The invention is naturally not limited to the above described and illustrated working examples, but may be varied above all as regards construction.

A working variation of the invention thus foresees the use in the transmitter of a clock circuit with low voltage power supply, in particular lower than the voltage of the system realized by partition of the main voltage or by separate power supply. This variation is appropriate if reading is required of the typical data of the tank and the battery, either as an alternative to or in combination with the updating of the control terminal at predetermined intervals of time.

This working example foresees the connection, at the input of the control circuit and in place of the contact of the reed sensor R, of the output of a free-running-divider multivibrator which sends a timed command pulse at predetermined intervals, this command pulse being sent to the input of the monostable multivibrator as per the previous description. The free-running multivibrator is powered at the minimum level permitted by the present technique (multivibrator-divider in low voltage technology) the power supply of which is interfaced through a specific circuit with the rest of the radio-frequency transmission logics that at present normally has higher power voltages to be able to provide higher power.

To achieve this it is possible to partition the main voltage or to power the device with a separate battery.

This device also makes it possible to achieve a significant reduction in energy consumption. This solution is advantageous for the purpose of extending the use of the system as per the invention to different types of sensors with respect to those used and previously described in this application, such as for example optoelectronic reflection sensors, or others.

## Claims

1. Automatic system for the detection and remote transmission of data, in particular of typical data relative to tanks for liquid fuels, such as for example the indication of the transit of the quantity of liquid fuel contained inside tanks, the level of the same, through predetermined points, the pressure or vacuum of the air contained in a cavity, the efficiency check of a cathodic protection, or the like, comprising detector means (M, R, H, 13, 14, 15) to detect the typical data and to transform them into electrical type signals, transmission means (2) of the said signal to a collection and/or processing station (3, 5), timer means which enable the detector and transmission means (2, R, H, 13, 14, 15) for a predetermined interval of time, **characterized by** the fact that the detector and transmission means assembly (2,R,H,13,14,15) comprises a static control and interface circuit (8c), i.e. without an active basic pulse clock, consisting of a monostable circuit constructed in such a way as to maintain, during the stand-by phase, the detector and transmission means (2,R,H,13,14,15) assembly in a locked condition with a very high degree of isolation from the electrical power supply.

2. System according to claim 1, **characterized by** the fact that the initialization of the transmission process is entrusted to a reed (R).

3. System according to claim 1, **characterized by** the fact that the initialization of the transmission process is entrusted to a free-running-divider multivibrator of the low voltage technology type.

4. System according to claim 3, **characterized by** the fact that the free-running-divider multivibrator is constructed in such a way that the enabling cycle comprises two enabling phases for predetermined intervals which take place in succession.

5. System according to claim 2, **characterized by** the fact that the reed (R) also constitutes a sensor element of one of the typical data, being equipped with permanent magnets (M) which can be moved in relation to the reed (R) depending on the variation of the typical data to be detected.

6. System according to one or more of the previous claims, **characterized by** the fact that the control circuit (8c) consists of a (timer) monostable multivibrator with a single trigger input that cannot be preset and which is controlled by the reed (R) of the detector and can be triggered on both positive and negative fronts.

7. System according to one or more of the previous claims, **characterized by** the fact that the monostable control circuit (8c) consists of static C-MOS circuits without an active base pulse clock.

8. System according to one or more of the previous claims, **characterized by** the fact that due to the effect of the magnetic hysteresis of the reed (R), the switchings of the same to open and closed correspond to two levels of the typical data to be detected, for example the level of a liquid.

9. System according to one or more of the previous claims, **characterized by** the fact that it comprises a collection terminal (3) equipped with a receiver-clipper (12a), of decoding means (12b), of programmable processing means (CPU) (12c), of a non-volatile memory (12d) and of means of indication and display (12e) of the data received via radio from the local transmitter (2), it being possible to programme the control terminal.

10. System according to claim 9, **characterized by** the fact that in combination with or as an alternative to the means of indication and/or display (12e), the control terminal (3) constitutes at least one intermediate data collection station, by means of radio transmission, this collection station retransmitting the data to a central computer (5), for example a so-called Host computer, by means of switched telephone line and using DTMF type telesignalling tones, the control terminal being equipped with a DTMF tone decoder and encoder (12f, 12g) and an interface for telephone line connection (12h).

11. System according to claim 10, **characterized by** the fact that the intermediate collection station (3) can be programmed as regards transmission and receiving functions, directly and/or remotely by the host computer (5).

12. System according to claims 10 or 11, **characterized by** the fact that the transmission protocol via telephone lines and/or also the transmission protocol via radio include a retransmission phase of the data packet, i.e. of the string of data transmitted by the receiving station (3, 5) to the transmitting station (2, 3, 5), a phase comparing the data packet received back with the original one transmitted and a phase for authorization of acceptance of the data transmitted, by sending a command string of authorization.

13. System according to one or more of the previous claims, **characterized by** the fact that the transmission and receiving protocol with DTMF tones includes in particular terminal recognition commands, data string start and end commands, data string acceptance confirmation commands, disconnection commands, request commands for remote programming by the central (host) computer (5) of the client terminal (3), in this case the intermediate station (3), and characters for the definition of the data.

14. System according to one or more of the previous claims, **characterized by** the fact that it is possible to foresee programming enabling passwords, a memory for the telephone numbers of the Host computer or computers (5) to which the intermediate station (3) must send the data, a data transmission programme which repeats the telephone call several times, waiting for the line to be free when it is busy, and an automatic procedure that can be enabled or disabled for the transmission of alarms or other indications.

15. System according to one or more of the previous claims, **characterized by** the fact that it is foreseen in combination with at least one tank, in particular for liquid fuels, for the detection of the typical data from the same, a local transmitter (2) being connected to the tank and to which it is possible to connect either separately or in combination at least one level detector (6, 7, R, H) positioned on the float head of the tank and/or at least one efficiency detector of a cathodic protection (14, 15) if the tank does not have a double protection wall and/or at least one detector (13) of the pressure or vacuum existing in the air-filled cavity of double wall tanks.

16. System according to claim 15, **characterized by** the fact that, in combination with one or more of the aforesaid detectors, it foresees at least one detector for the charge status of the power-supply batteries of the transmitter (2) connected to the tank.

17. System according to claim 16, **characterized by** the fact that the level detector comprises electromagnetic means, consisting of at least one permanent mobile magnet (M) which moves on a predetermined path on the basis of the level of the liquid fuel and at least one detector consisting of a stationary reed (R) which cooperates with the permanent magnet (M).

18. System according to claim 17, **characterized by** the fact that the reed sensor (R) can be connected to at least one additional sensor consisting of a Hall probe (H) which has a different position to the reed sensor (R).

19. System according to claim 17 or 18, **characterized by** the fact that the detector (R, H, M) is constructed in such a way that it can be calibrated to enable the transmitter (2) only on transit of the liquid through a limited number of predetermined levels and which are considered significant for correct refilling management.

20. System according to one or more of the previous claims, **characterized by** the fact that the level detector (R, H, M, 6, 7) comprises at least one permanent magnet (M) which turns on a circular path and which adopts different angular positions according to the level of liquid in the tank, and at least one stationary reed sensor ' (R), the status of which is controlled by the permanent magnet (M) and which is positioned along the circular path of the permanent magnet (M) so that it interferes with the same magnetically, this being the indication that a predetermined level has been reached and thus also the transmission enabling signal of the transmitter (2).

21. System according to one or more of the previous claims, **characterized by** the fact that the charge detector of the power-supply battery of the transmitter (2) consists of a voltage indicator.

22. System according to one or more of the previous claims, **characterized by** the fact that it is foreseen in combination with double wall tanks with intermediate cavity in which pressure sensors (13) are fitted which emit electrical signals correlated with the pressure and vacuum value and which are connected to their output to the transmitter (2).

23. System according to one or more of the previous claims, **characterized by** the fact that it is foreseen in combination with a single wall tank or one with no peripheral cavity, and which is made from metallic material, there being a cathodic protection comprising a sacrificial anode (14) made from more electronegative material than the metal used to make the tank, and a non-polarizable reference anode (15), the difference in voltage being detected between the reference anode (15) and the sacrificial anode (14) with respect to the tank and this value being sent to the transmitter (2) when it falls below a predetermined threshold of immunity.

## Patentansprüche

1. Automatisches System für die Erfassung und Fernübertragung von Daten, insbesondere von typischen Daten betreffend Flüssigtreibstofftanks wie zum Beispiel die Angabe des Übergangs der in den Tanks enthaltenen Flüssigkeitsmenge, des Flüssigkeitsstands in Bezug auf vorgegebene Punkte, des Drucks oder Unterdrucks der in einem Hohlraum enthaltenen Luft, die Prüfung der Wirksamkeit eines kathodischen Korrosionsschutzes o.ä, einschließlich Detektionseinrichtungen (M, R, H, 13, 14, 15) zum Erfassen der typischen Daten und zum Umwandeln dieser Daten in elektrische Signale, Übertragungseinrichtungen (2) zum Übertragen der genannten Signale an eine Sammel- und/oder Verarbeitungsstation (3, 5), Zeitgebereinrichtungen, welche die Detektionseinrichtungen und die Übertragungseinrichtungen (2, R, H, 13, 14, 15) für einen vorgegebenen Zeitraum freigeben, **dadurch gekennzeichnet, dass** die Baugruppe aus Detektions- und Übertragungseinrichtungen (2, R, H, 13, 14, 15) eine statische Steuer- und Schnittstellenschaltung (8c), d.h. ohne aktiven Grundimpulstaktgeber, einschließt, die aus einer monostabilen Schaltung besteht, die so konstruiert ist, dass während der Bereitschaftsphase die Baugruppe aus Detektions- und Übertragungseinrichtungen (2, R, H, 13, 14, 15) in einem verriegelten Zustand mit einem sehr hohen Grad der Isolierung von der Stromversorgung bleibt.

2. System gemäß Anspruch 1, **dadurch gekennzeichnet, dass** die Initialisierung des Übertragungsvorgangs einem Reed-Relais (R) übertragen ist.

3. System gemäß Anspruch 1, **dadurch gekennzeichnet, dass** die Initialisierung des Übertragungsvorgangs einem freischwingenden Teiler-Multivibrator mit Niederspannungstechnik übertragen ist.

4. System gemäß Anspruch 3, **dadurch gekennzeichnet, dass** der freischwingende Teiler-Multivibrator so aufgebaut ist, dass der Freigabezyklus zwei aufeinanderfolgende Freigabephasen vorgegebener Zeitdauer umfasst.

5. System gemäß Anspruch 2, **dadurch gekennzeichnet, dass** das Reed-Relais (R) auch Teil eines Sensor-Elements für typische Daten ist, das über Dauermagneten (M) verfügt, die in Beziehung zum Reed-Relais (R) in Abhängigkeit von der Variation der zu detektierenden typischen Daten bewegt werden können.

6. System gemäß einem oder mehreren der vorherigen Ansprüche, **dadurch gekennzeichnet, dass** die Steuerschaltung (8c) aus einem monostabilen Multivibrator (Timer) mit einem einzigen Trigger-Eingang besteht, der nicht voreingestellt werden kann und der vom Reed-Relais (R) des Detektors gesteuert wird und auf der positiven und der negativen Flanke getriggert werden kann.

7. System gemäß einem oder mehreren der vorherigen Ansprüche, **dadurch gekennzeichnet, dass** die monostabile Steuerschaltung (8c) aus statischen C-MOS-Schaltkreisen ohne aktiven Grundimpulstaktgeber besteht.

8. System gemäß einem oder mehreren der vorherigen Ansprüche, **dadurch gekennzeichnet, dass** aufgrund der Wirkung der magnetischen Hysterese des Reed-Relais (R) dessen Schaltungen zum Öffnen und Schließen zwei Pegeln der zu detektierenden typischen Daten entsprechen wie z.B. dem Stand einer Flüssigkeit.

9. System gemäß einem oder mehreren der vorherigen Ansprüche, **dadurch gekennzeichnet, dass** es ein Datensammelterminal (3) mit einem Receiver-Clipper (12a), Dekodiereinrichtungen (12b), programmierbare Datenverarbeitungseinrichtungen (CPU) (12c), einen nicht-flüchtigen Speicher (12d) und Melde- und Anzeigeeinrichtungen (12e) für die vom örtlichen Sender (2) über Funk empfangenen Daten einschließt, und dass es möglich ist, das Steuerterminal zu programmieren.

10. System gemäß Anspruch 9, **dadurch gekennzeichnet, dass** zusätzlich zu oder als Alternative zu den Melde- und/oder Anzeigeeinrichtungen (12e) das Steuerterminal (3) mindestens eine Zwischendatensammelstation mittels Funkübertragung einschließt, dass diese Sammelstation die Daten an einen Zentralrechner (5) wie zum Beispiel einen so genannten Host-Rechner mittels Telefonwählleitungen und unter Verwendung von DTMF-Wähltönen überträgt, und dass das Steuerterminal mit einem DTMF-Decoder und -Encoder (12f, 12g) und einer Schnittstelle für den Anschluss der Telefonleitung (12h) ausgestattet ist.

11. System gemäß Anspruch 10, **dadurch gekennzeichnet, dass** die Zwischendatensammelstation (3) in Hinblick auf die Übertragungs- und Empfangsfunktionen direkt und/oder aus der Ferne über den Host-Rechner (5) programmiert werden kann.

12. System gemäß Anspruch 10 oder 11, **dadurch gekennzeichnet, dass** das Übertragungsprotokoll für die Übertragung über Telefonleitungen und/oder auch das Übertragungsprotokoll für die Funkübertragung eine Phase für die Rückübertragung des Datenpakets, d.h. des übertragenen Zeichensatzes, von der Empfangsstation (3, 5) an die Sendestation (2, 3, 5) einschließt, sowie eine Phase für den Vergleich des zurück empfangenen Datenpakets mit dem ursprünglich übertragenen Datenpaket und eine Phase für die Autorisierung der Annahme der übermittelten Daten durch Übermittlung eines Autorisierungskommandostrings.

13. System gemäß einem oder mehreren der vorherigen Ansprüche, **dadurch gekennzeichnet, dass** das Übertragungs- und Empfangsprotokoll mit DTMF-Wähltönen im Einzelnen Terminal-Erkennungsbefehle einschließt, sowie Datenstring-Start- und Endkommandos, Datenstring-Annahmebestätigungskommandos, Verbindungstrennkommandos, Anforderungskommandos für die Fernprogrammierung durch den Zentralrechner (Host) (5) des Client-Terminals (3), in diesem Fall die Zwischenstation (3), und Zeichen für die Definition der Daten.

14. System gemäß einem oder mehreren der vorherigen Ansprüche, **dadurch gekennzeichnet, dass** es möglich ist, Programmierungsfreigabe-Passwörter vorzusehen sowie einen Speicher für die Rufnummern des Host-Rechners oder der Rechner (5), an den die Zwischenstation (3) die Daten senden muss, ein Datenübertragungsprogramm, das die Telefonanrufe mehrmals wiederholt und abwartet, bis die Leitung frei ist, falls sie belegt ist, und ein automatisches Verfahren, das freigegeben oder gesperrt werden kann, für die Übertragung von Alarmmeldungen oder anderen Meldungen.

15. System gemäß einem oder mehreren der vorherigen Ansprüche, **dadurch gekennzeichnet, dass** in Kombination mit mindestens einem Tank, insbesondere für Flüssigtreibstoff, für die Detektion der typischen Daten von diesem ein örtlicher Sender (2) vorgesehen ist, der an den Tank angeschlossen ist und an den der Anschluss entweder separat oder kombiniert von mindestens einem Füllstand-Detektor (6, 7, R, H), der auf dem Schwimmkopf des Tanks positioniert ist, und/oder mindestens einem Wirkungsgrad-Detektor eines kathodischen Korrosionsschutzes (14, 15) möglich ist, wenn der Tank keine doppelte Schutzwand hat, und/oder mindestens einen Detektor (13) des Drucks oder Unterdrucks im luftgefüllten Hohlraum von doppelwandigen Tanks.

16. System gemäß Anspruch 15, **dadurch gekennzeichnet, dass** in Kombination mit einem oder mehreren der vorgenannten Detektoren mindestens ein Detektor für den Ladezustand der Stromversorgungsbatterien des Senders (2), der an den Tank angeschlossen ist, vorgesehen ist.

17. System gemäß Anspruch 16, **dadurch gekennzeichnet, dass** der Füllstand-Detektor elektromagnetische Mittel einschließt, die aus mindestens einem beweglichen Dauermagnet (M) bestehen, der sich auf einer vorgegebenen Bahn in Abhängigkeit vom Stand des Flüssigtreibstoffs bewegt, sowie aus mindestens einem Detektor, der aus einem stationären Reed-Relais (R) besteht, das mit dem Dauermagnet (M) zusammenarbeitet.

18. System gemäß Anspruch 17, **dadurch gekennzeichnet, dass** der Reed-Sensor (R) an mindestens einen zusätzlichen Sensor angeschlossen werden kann, der aus einer Hall-Sonde (H) besteht, die eine andere Position als der Reed-Sensor (R) hat.

19. System gemäß Anspruch 17 oder 18, **dadurch gekennzeichnet, dass** der Detektor (R, H, M) so konstruiert ist, dass er so kalibriert werden kann, dass er den Sender (2) nur bei Passage der Flüssigkeit einer begrenzten Anzahl von vorgegebenen Pegeln freigibt, die als für das ordnungsgemäße Füll-Management signifikant angesehen werden.

20. System gemäß einem oder mehreren der vorherigen Ansprüche, **dadurch gekennzeichnet, dass** der Füllstand-Detektor (R, H, M, 6, 7) mindestens einen Dauermagnet (M) einschließt, der auf einer Kreisbahn dreht und verschiedene Winkelstellungen in Einklang mit dem Flüssigkeitsstand im Tank einnimmt, und mindestens einem stationären Reed-Sensor (R), dessen Zustand vom Dauermagnet (M) gesteuert wird und der auf der Kreisbahn des Dauermagneten (M) angeordnet ist, so dass er mit ihm magnetisch interferiert, und dass dies die Anzeige, dass ein bestimmter Pegel erreicht wurde, ist sowie das Übertragungsfreigabesignal des Senders (2).

21. System gemäß einem oder mehreren der vorherigen Ansprüche, **dadurch gekennzeichnet, dass** der Ladezustandsdetektor der Stromversorgungsbatterie des Senders (2) aus einem Spannungsanzeiger besteht.

22. System gemäß einem oder mehreren der vorherigen Ansprüche, **dadurch gekennzeichnet, dass** es in Kombination mit doppelwandigen Tanks mit Zwischenraum vorgesehen ist, in denen Drucksensoren (13) installiert sind, die elektrische Signale aussenden, die mit dem Druck- und Unterdruckwert korreliert sind, und deren Ausgang an den Sender (2) angeschlossen ist.

23. System gemäß einem oder mehreren der vorherigen Ansprüche, **dadurch gekennzeichnet, dass** es in Kombination mit einem einwandigen Tank oder mit einem Tank ohne Hohlwand aus Metall vorgesehen ist, dass es einen kathodischen Korrosionsschutz gibt, der eine Opferanode (14) einschließt, die aus einem Material besteht, das elektronegativer als das für die Herstellung des Tanks verwendete Metall ist, und eine nicht-polarisierbare Referenzanode (15), dass die Spannungsdifferenz zwischen der Referenzanode (15) und der Opferanode (14) bezüglich des Tanks gemessen wird und dass dieser Wert an den Sender (2) übermittelt wird, wenn er einen bestimmten Immunitätsschwellwert unterschreitet.

## Revendications

1. Système automatique pour la détection et la transmission à distance de données, notamment de données caractéristiques concernant des réservoirs de combustibles liquides telles que, par exemple, l'indication de la quantité de combustible liquide passant dans les réservoirs, son niveau, à des points prédéterminés, la pression ou le vide d'air se trouvant dans une cavité, le contrôle de l'efficacité d'un dispositif de protection cathodique ou similaire, comprenant un détecteur (M, R, H, 13, 14, 15) afin de détecter les données caractéristiques et de les transformer en signaux électriques, un dispositif de transmission (2) de ces signaux vers un poste de collecte et/ou de traitement (3, 5), un temporisateur activant le détecteur et le dispositif de transmission (2, R, H, 13, 14, 15) pendant un laps de temps donné, **caractérisé en ce que** l'ensemble formé par le détecteur et le dispositif de transmission (2, R, H, 13, 14, 15) comprend un circuit de commande et d'interface statique (8c), à savoir sans cadenceur de base actif, se composant d'un circuit monostable conçu de façon à maintenir, pendant la phase d'attente, l'ensemble formé par le détecteur et le dispositif de transmission (2, R, H, 13,14, 15) à l'état fermé avec un très haut degré d'isolation par rapport à l'alimentation électrique.

2. Système selon la revendication 1, **caractérisé en ce que** l'initialisation du processus de transmission est assurée par un relais reed (R).

3. Système selon la revendication I, **caractérisé en ce que** l'initialisation du processus de transmission est assurée par un multivibrateur à diviseur fonctionnant de façon indépendante, de type à faible tension.

4. Système selon la revendication 3, **caractérisé en ce que** le multivibrateur à diviseur fonctionnant de façon indépendante est conçu de façon à ce que le cycle d'activation comprenne deux phases d'activation à des intervalles prédéfinis se succédant.

5. Système selon la revendication 2, **caractérisé en ce que** le relais reed (R) constitue également un élément détecteur de l'une des données caractéristiques, étant équipé d'aimants permanents (M) qui peuvent être déplacés en corrélation avec le relais reed (R) en fonction de la variation des données caractéristiques à détecter.

6. Système selon une ou plusieurs des revendications précédentes, **caractérisé en ce que** le circuit de commande (8c) se compose d'un multivibrateur monostable (temporisateur) avec une entrée à déclenchement simple qui ne peut pas être préréglée et qui est contrôlée par le relais reed (R) du détecteur et qui peut être déclenchée sur les fronts positif et négatif.

7. Système selon une ou plusieurs des revendications précédentes, **caractérisé en ce que** le circuit de commande monostable (8c) se compose de circuits C-MOS sans cadenceur de base actif.

8. Système selon une ou plusieurs des revendications précédentes, **caractérisé en ce que**, sous l'effet de l'hystérésis magnétique du relais reed (R), la commutation de ce dernier pour l'ouverture et la fermeture correspond aux deux niveaux des données caractéristiques à détecter, par exemple, le niveau d'un liquide.

9. Système selon une ou plusieurs des revendications précédentes, **caractérisé en ce qu'**il comprend un terminal de collecte (3) équipé d'un récepteur écrêteur (12a), d'un dispositif de décodage (12b), d'une unité centrale de traitement (UCT) (12c), d'une mémoire non volatile (12d) et d'un dispositif d'indication et d'affichage (12e) des données reçues via radio en provenance d'un émetteur local (2), étant possible de programmer le terminal de commande.

10. Système selon la revendication 9, **caractérisé en ce que**, de façon combinée ou en alternative au dispositif d'indication et/ou d'affichage (12e), le terminal de commande constitue au moins un poste intermédiaire de collecte des données, par transmission via radio, le poste de collecte retransmettant les données à un ordinateur central (5), par exemple, un ordinateur principal, sur une ligne de téléphone commutée et en utilisant des tonalités de signalisation à distance de type DTMF, le terminal de commande étant équipée d'un décodeur et d'un codeur à tonalités DTMF (12f, 12g) et d'une interface pour la connexion téléphonique (12h).

11. Système selon la revendication 10, **caractérisé en ce que** le poste de collecte intermédiaire (3) peut être programmé au niveau des fonctions de transmission et de réception, directement et/ou à distance, par l'ordinateur principal (5).

12. Système selon les revendications 10 ou 11, **caractérisé en ce que** le protocole de transmission par ligne téléphonique et/ou le protocole de transmission via radio comprend une phase de retransmission du paquet de données, à savoir une chaîne de données transmises par le poste récepteur (3, 5) au poste de transmission (2, 3, 5), une phase comparant le paquet de données réceptionnées en retour avec celles originairement transmises et une phase pour l'autorisation de l'acceptation des données transmises, en envoyant une chaîne de commande de l'autorisation.

13. Système selon une ou plusieurs des revendications précédentes, **caractérisé en ce que** le protocole de transmission et de réception à tonalités DTMF comprend notamment des commandes de reconnaissance du terminal, des commandes de début et de fin de chaîne de données, des commandes de confirmation d'acceptation de chaînes de données, des commandes de déconnexion, des commandes de demande pour la programmation à distance par l'ordinateur central (principal) (5) du terminal du client (3), dans ce cas, le poste intermédiaire (3) et les caractères de définition des données.

14. Système selon une ou plusieurs des revendications précédentes, **caractérisé en ce qu'**il est possible de prévoir des mots de passe d'activation de programmation, une mémoire pour les numéros de téléphone du ou des ordinateurs principaux (5) auxquels le poste intermédiaire (3) doit envoyer les données, un programme de transmission de données qui recompose plusieurs fois le numéro de téléphone, dans l'attente que la ligne se libère lorsqu'elle est occupée, et une procédure automatique qui peut être activée ou désactivée pour la transmission d'alarmes ou d'autres indications.

15. Système selon une ou plusieurs des revendications précédentes, **caractérisé en ce qu'**il est prévu, de façon combinée avec au moins un réservoir, notamment pour les combustibles liquides, pour la détection des données caractéristiques de ce dernier, un émetteur local (2) étant raccordé au réservoir et auquel il est possible de relier, séparément ou de façon combinée, au moins un détecteur de niveau (6, 7, R, H) placé sur la tête du flotteur du réservoir et/ou au moins un détecteur d'efficacité d'un dispositif de protection cathodique (14, 15) si le réservoir n'est pas équipé d'une double paroi de protection et/ou d'au moins un détecteur (13) de pression ou de vide dans la cavité remplie d'air des réservoirs à double paroi.

16. Système selon la revendication 15, **caractérisé en ce qu'**il prévoit, de façon combinée avec un ou plusieurs des détecteurs précités, au moins un détecteur pour l'état de charge des batteries d'alimentation de l'émetteur (2) relié au réservoir.

17. Système selon la revendication 16, **caractérisé en ce que** le détecteur de niveau comprend un dispositif électromagnétique, se composant d'au moins un aimant permanent mobile (M) qui se déplace sur un parcours prédéterminé en fonction du niveau de combustible liquide et d'au moins un détecteur équipé d'un relais reed fixe (R) qui interagit avec l'aimant permanent (M).

18. Système selon la revendication 17, **caractérisé en ce que** le capteur reed (R) peut être relié à au moins un capteur supplémentaire se composant d'une sonde de Hall (H) qui a une position différente par rapport au capteur reed (R).

19. Système selon la revendication 17 ou 18, **caractérisé en ce que** le détecteur (R, H, M) est conçu de façon à pouvoir être réglé pour activer l'émetteur (2) uniquement au passage du liquide à travers un nombre limité de niveaux prédéterminés et considérés importants pour la gestion des nouveaux remplissages.

20. Système selon une ou plusieurs des revendications précédentes, **caractérisé en ce que** le détecteur de niveau (R, H, M, 6, 7) comprend au moins un aimant permanent (M) qui se déplace sur un parcours circulaire et prend différentes positions angulaires en fonction du niveau de liquide dans le réservoir, et au moins un capteur reed fixe (R) dont l'état est contrôlé par l'aimant permanent (M) et qui est placé le long du parcours circulaire de l'aimant permanent (M) de façon à interférer avec celui-ci magnétiquement, ce qui est l'indication du fait qu'un niveau prédéterminé a été atteint et donc aussi la retransmission activant le signal de l'émetteur (2).

21. Système selon une ou plusieurs des revendications précédentes, **caractérisé en ce que** le détecteur de charge de la batterie d'alimentation de l'émetteur (2) se compose d'un indicateur de tension.

22. Système selon une ou plusieurs des revendications précédentes, **caractérisé en ce qu'**il est prévu, de façon combinée avec les réservoirs à paroi double, avec une cavité intermédiaire dans laquelle les capteurs de pression (13) sont montés, qui émettent des signaux électriques en corrélation avec la pression et le niveau de vide et qui sont reliés à leur sortie à l'émetteur (2).

23. Système selon une ou plusieurs des revendications précédentes, **caractérisé en ce qu'**il est prévu, de façon combinée avec un réservoir en métal à paroi simple ou avec une cavité non périphérique, en présence d'un dispositif de protection cathodique comprenant une anode sacrificielle (14) réalisée dans une quantité de matériau électronégatif supérieure par rapport au métal utilisé pour le réservoir, et une anode de référence non polarisable (15), la différence de tension étant détectée entre l'anode de référence (15) et l'anode sacrificielle (14) par rapport au réservoir et cette valeur étant envoyée à l'émetteur (2) lorsqu'elle tombe au-dessous d'un seuil d'immunité prédéterminé.
